# EUROPEAN PATENT APPLICATION

(11) **EP 0 927 894 A1**
(43) Date of publication of application: **07.07.1999**
(21) Application number: 98124127.6
(22) Date of filing: 18.12.1998
(51) Int. Cl.: G02B 6/35

(54) **Fiber-to-multiple-fiber magnetic switch**

(30) Priority: 29.12.1997 EP 97122935
(71) Applicant: PIRELLI CAVI E SISTEMI S.p.A., 20126 Milano (IT)
(72) Inventor: Galeotti, Adriano, 20129 Milano (IT); Delrosso, Giovanni, 28010 Sologno di Caltignaga (NO) (IT)
(74) Representative: Giannesi, Pier Giovanni

(57) **Abstract**

A magnetically actuated switch for switching a single fiber to any one of a plurality of other fibers (2) is composed of a fiber support sleeve (3), a movable optical fiber having a ferromagnetic material (4) secured thereto extending through and fixed at one end of the fiber support sleeve, and a bushing (6) positioned at the opposite end of the fiber support sleeve; said bushing further containing a plurality of fixed fibers positioned within grooves (5) designed to guide the movable fiber into alignment with one of the fixed fibers. The movable fiber is moved into alignment with one of the fixed fibers by use of strategically positioned solenoids (7(a-d)) and fixed magnets (8(a-d)) that interact with the fiber's attached ferromagnetic material.

## Description

### BACKGROUND OF THE INVENTION

The present invention relates to switching mechanisms for optical fibers and, more particularly, to any such mechanism capable of switching one fiber to a selected one of a plurality of other fibers.

The advent of high quality optical fibers has spurred the development and installation of systems using optical fibers to carry light wave signals between remote points. A requirement of such a system is that any one of a group of optical fibers be capable of connection to any one of another group of optical fibers. Fiber optic switches perform this function.

Optical switches, however, do not physically connect optical fibers. Rather, the fibers (or, more accurately, the signal carrying cores exposed at the fiber ends) are moved into a signal transferring relationship so that a light wave carried by one fiber is picked up by the other fiber. Accordingly, the two factors of particular significance to the operation of a fiber optic switch are the accuracy and speed with which the fibers are aligned. Indeed, the high modulation rate of light signal through optical fibers mandates that their alignment be performed very rapidly, irrespective of whether only two or a relatively large number of fibers are incorporated into the switch. Users, in turn, have little tolerance for delay occasioned by a switch that is slow to react. Another factor of significance requires that alignment be performed very accurately since signal attenuation (or avoidance of it) is very much a function of accurate alignment. This factor is of even greater significance when a number of switches are attached in series.

The speed of fiber alignment is addressed in part by the fact that fibers have very small cross-sections, the core diameter being less than 10 µm for single-mode fibers, and less than 0.2 mm in multi-mode fibers. Accordingly, the conventional designer can accomplish switching through a relatively small range of motion between the ends of the fibers to be connected. Indeed, a lateral displacement by one core diameter of a few micro-meters reduces the power transfer to only a few percent of the maximum recognized when the fibers are exactly in line. An additional displacement of a like amount can reduce the transfer to levels so small as to be negligible.

Currently available products use a variety of methods to move one optical fiber into or out of a position of transmission with respect to one or more other optical fibers. Several switches have been reported that involve a piezoelectrical element having an optical fiber affixed thereto. A second optical fiber is placed in general proximity to the first optical fiber so that, upon application of a first voltage to the piezoelectric element, the two optical fibers are caused to be aligned and, upon application of a second different voltage to the element, the optical fibers are caused to be nonaligned. Such an apparatus is disclosed in U.S. Patent No. 4,303,302.

Another means for positioning the optical fiber in alignment with another optical fiber involves using a coil electromagnet (a solenoid) to produce motion of a fiber, prism or plate. U.S. Patent No. 4,652,081 discloses a switch for switching a single fiber to any one of a plurality of other fibers by aligning the fiber end faces in a funnel shaped guide. The single fiber is mounted in the narrow end portion of the guide and the plurality of other fibers are held in the wide end portion of the guide. Each of the plurality of fibers is independently movable longitudinally into the guide, for example, by using electromagnetic actuators, so that as a desired fiber moves further into the guide, its end is guided toward the narrow end where it will align with the end of the single fiber.

The magnetically controlled optical switch resolves a number of the problems associated with the cost and complexity of other switch designs. The conventional design of such a switch, however, has required the use of multiple ferromagnetic bodies attached to multiple movable fibers that are completely encased or surrounded by solenoids.

U.S. Patent No. 5,261,015 shows a monolithically fabricated magnetically-actuatable opto-mechanical on/off switch including a pair of planar optical waveguides. The first waveguide of the pair is fixed into position while the second waveguide of the pair is movable between a conducting orientation wherein it is in optical alignment with the first waveguide and a non-conducting orientation wherein it is not in optical alignment with the first waveguide. A ferromagnetic component is fixedly secured to the movable second waveguide for movement therewith as a unit. A magnetic means may be provided for moving the ferromagnetic component, and hence for moving the movable second waveguide between the conducting and nonconducting orientations. The magnetic means may comprise a permanent magnet or an electrical coil acting as an electromagnetic. The magnetic means can be as close as 1 mm to a cantilever including the movable waveguide end portion and the ferromagnetic component. Additionally, an oppositely directed magnet may be used to bias the cantilever to its conducting orientation, with movement of the cantilever to the nonconducting orientation occurring only when a larger magnetic force is applied.

Electronics Letters, Vol. 12, No. 15, 22nd July 1976, page 388 discloses an optical fiber switch which depends on transverse mechanical motion of round fibers within a square-bore tube. Two fibers of identical cross section are pressed into opposite comers of the square tube, their ends being in one plane. A third fiber is introduced at the other end of the square tube and placed so that its end is a few micrometers away from the ends of the first two fibers. In an exemplary experiment, the motion of the third fiber was accomplished by pushing it transversely from the outside. This paper further suggests that the motion of the fiber could be achieved by magnetic forces acting on the fiber either inside or outside the square glass tube, the fiber being coated with a ferromagnetic sleeve. The magnetic field would be generated by an electromagnet as in the conventional telephone switching relay. The paper, however, fails to discuss the details of such a construct.

In yet another embodiment of conventional optical switch design, apparati employing directable light beams to align the fibers have been proposed in U.S. Patents Nos. 3,985,975 and 4,065,644. Holograms and CRT tubes are utilized in directing the light beam and positioning the fibers. These designs are also quite complex and costly to design and manufacture.

The inventors of the invention disclosed herein have discovered that conventional techniques fail to provide a magnetically-actuatable optical fiber switch that permits the fast switching of one optical fiber between a plurality of other optical fibers in a 1xn or nx1 application and a reliable hold of the fiber position after switching, even under changing environmental conditions (e.g., thermal stress, vibrations, mechanical shocks, etc.), so that there is minimal insertion loss (thereby allowing a single switch to be connected in cascade to other switches without the use of collimators and flexion prisms).

Accordingly, the present invention provides such a switch, system and/or device that is both economical to manufacture and inexpensive to maintain.

### SUMMARY OF THE INVENTION

The advantages and purpose of the invention will be set forth in part in the description which follows and, in part, will be apparent from the description, or may be learned by practice of the invention. The advantages and purpose of the invention will be realized and attained by the elements and combinations particularly pointed out in the written description and claims hereof, as well as the appended drawings.

To attain the advantages and in accordance with the purpose of the invention, as embodied and broadly described, the present invention provides an optical fiber switch comprising a fiber support sleeve, a movable optical fiber having a ferromagnetic material fixedly secured thereto extending through and fixed at one end of the fiber support sleeve, and a grooved bushing positioned at the opposite end of the fiber support sleeve, the bushing having positioned therein at least two fixed fibers in V grooves designed to guide the movable fiber into communication with one of the fixed fibers. The movable fiber is moved into alignment with one of the fixed fibers by use of at least two solenoids positioned around the fiber support sleeve. One of at least two permanent magnets are then used to latch the end of the movable fiber into communication with the end of the fixed fiber such that light may be transmitted between the movable fiber and the fixed fiber.

In one aspect of the invention, the ends of fixed and movable fibers have an enlarged mode field diameter (MFD).

In another aspect of the invention, each solenoid is associated with a permanent magnet and with a magnetic feedthrough attached to the fiber support sleeve. In a preferred embodiment the magnetic feedthrough penetrates a side wall of the fiber support sleeve.

In yet another aspect of the invention, the movable fiber has a magnetic sleeve applied directly to the fiber's standard acrylic coating.

A ferromagnetic contact surrounding the magnetic sleeve and being fixedly secured to one end of the magnetic sleeve is preferably provided to suppress a magnetic gap between the magnetic sleeve and the magnetic feedthrough. According to one embodiment thereof the ferromagnetic contact comprises a flexible tunnel-shaped ferromagnetic sheath positioned around the magnetic sleeve and being fixedly secured to the magnetic sleeve at the sheath's smaller diameter end. According to a different embodiment thereof the ferromagnetic contact comprises flexible strips of a magnetic material arranged around the magnetic sleeve and fixedly secured to one end of the magnetic sleeve.

In one embodiment of the invention a fiber housing comprising the fiber support sleeve and the bushing is hermetically sealed.

It is to be understood that both the foregoing general description and the following detailed description are exemplary and explanatory and are intended to provide further explanation of the invention as claimed.

### BRIEF DESCRIPTION OF THE DRAWINGS

The accompanying drawings are included to provide a further understanding of the invention and are incorporated in and constitute a part of the specification, illustrate several embodiments of the invention and, together with the description, serve to explain the principles of the invention. In the drawings,
Fig. 1 is a sectional view showing the structure of a 1x4 or 4x1 optical switch according to the invention;
Fig. 2 is an enlarged sectional view of the optical switch of Fig. 1;
Fig. 3 is a cross-sectional view of the optical switch of Fig. 2 taken at line "A";
Fig. 4 is an enlarged sectional view of the ferromagnetic component of the movable fiber depicted in Figs. 1-3;
Fig. 5 is an enlarged view of the end face of the movable fiber as it is brought into alignment with the end face of one of the fixed fibers of Figs. 1-4;
Fig. 6 is a sectional view of a demonstrator incorporating the present invention; and
Fig. 7 is a view of the demonstrator of Fig. 6 from direction "A".

### DESCRIPTION OF THE PREFERRED EMBODIMENT

Reference will now be made in detail to the present embodiments of the invention, examples of which are illustrated in the accompanying drawings. Wherever possible, the same reference numbers will be used throughout the drawings to refer to the same or like components.

In accordance with the invention, a fiber-to-multiple-fiber magnetic switch is provided. The invention calls for a mechanical switch that collimates the optical signal directly from fiber to fiber, does not require micro-optical components, and effectuates the switching by moving one of a plurality of optical fibers by means of a magnetic field.

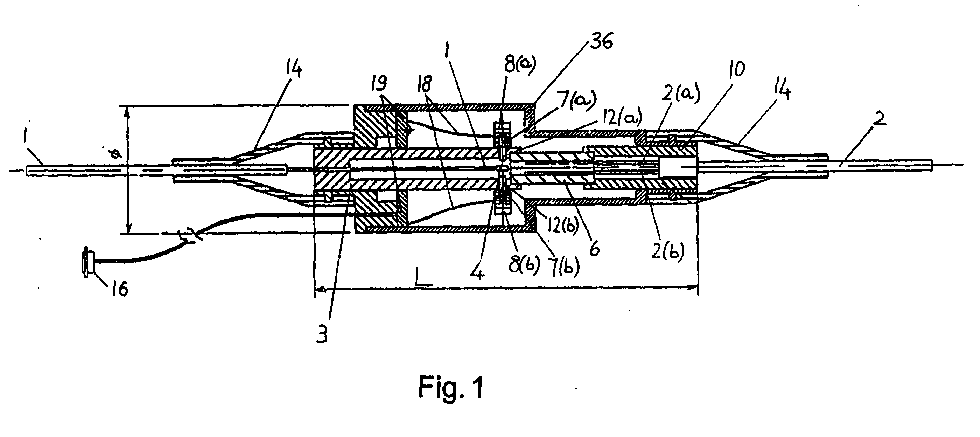

In the embodiment illustrated in Figs. 1-3, there is shown a switch mechanism for switching light between a single optical fiber 1 and any one of four fixed optical fibers 2(a-d). The switch mechanism is composed of two distinct bodies: a fiber support sleeve 3 and a bushing 6. A movable optical fiber 1 is fixed to the end of fiber support sleeve 3 opposite the bushing 6. The other end of movable fiber 1 extends into bushing 6. A ferromagnetic component 4 is attached, for movement therewith, to a portion of movable fiber 1 opposite the fixed end, but still within support sleeve 3. The magnetic properties of this ferromagnetic component enable mechanical manipulation of the movable fiber by a magnetic field.

The embodiment shown in Figs. 1-3 further discloses four fixed optical fibers 2(a-d), each having an end that may be positioned opposite to the end of movable fiber 1. The actual number of fixed fibers, however, may vary from two to n and need not be limited to four. Accordingly, a device incorporating this invention may constitute a 1xn or nx1 optical switch.

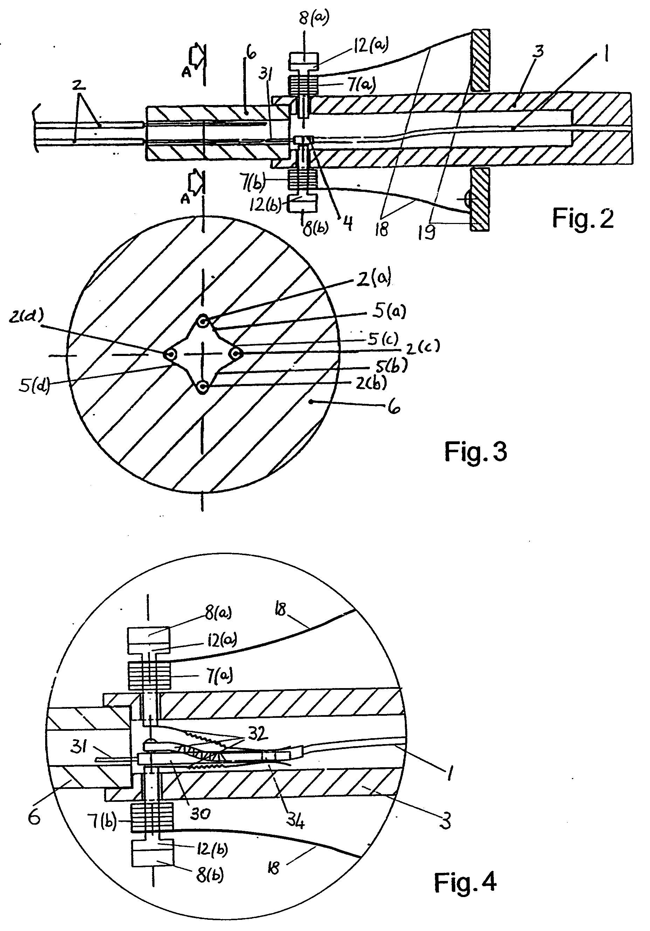

As shown in Figs. 2 and 3, the end sections of the four fixed fibers 2(a-d) have their coating removed (so as to leave the glass part of the fiber exposed) and are positioned entirely within the switch's second body, bushing 6, in grooves 5(a-d). In the preferred embodiment, the grooves 5 are precisely cut in the shape of a "V", by using, for example, a 0.1 mm diameter wire spark erosion process. The "V" shape of each groove is fashioned so as to guide movable fiber 1 into alignment with one of the fixed fibers 2, thereby permitting light to be transmitted between the movable fiber and the fixed fiber.

Bushing 6 may be manufactured from, for example, stainless steel, titanium (which allows for a better matching of fiber expansion coefficients), or Kovar™ (for an optimal matching of fiber expansion coefficients). Support sleeve 3 may be made from, for example, a ceramic material. The end of sleeve 3 adjacent bushing 6 is shaped so as to circularly engage the end of bushing 6. To ensure a tight seal, a glue can be used between the union of sleeve 3 and bushing 6. As an alternative, sleeve 3 and/or the end abutting bushing 6 could be metalized so that the junction can be soldered.

The ferromagnetic component 4 on movable fiber 1 may be, for example, a sleeve of pure iron, of a ferromagnetic alloy or of another ferromagnetic material. If movable fiber 1 has a protective coating, for example a standard acrylic coating, an iron powder or an equivalent thereof may be applied directly to the fiber as part of the coating mixture. In a preferred embodiment, however, the standard fiber coating is extra coated with a UV curable epoxy that includes an iron powder or an equivalent thereof. According to a further alternative, a plastic material comprising an iron powder or an equivalent thereof may be extruded around movable fiber 1 to form component 4. In yet another alternative, component 4 could be created by vacuum deposition of iron or nickel onto the fiber's outer shell. However, regardless of the alternative utilized in metallically coating movable fiber 1, the portion 31 of movable fiber 1 extending into bushing 6 is preferably uncoated (i.e., just a glass fiber with no acrylic coating, etc.) so as to allow for precision in alignment with fixed fibers 2. According to the above, processing of fiber 1 can include sleeving a whole end portion of movable fiber 1 with a ferromagnetic substance and then stripping the fiber coating from an end section of the sleeved portion, so as to leave a glass section 31 of the fiber uncoated.

The movement of movable fiber 1 towards one of the four (or n) fixed fibers 2 is magnetically controlled and dictated by a magnetic field formed by four (or n) solenoids 7(a-d) and four (or n) permanent magnets 8(a-d) mounted in series on four (or n) magnetic feedthroughs 12(a-d) of a ferromagnetic material, such as iron or a ferromagnetic alloy. The feedthroughs are fixed to the walls of fiber support sleeve 3, each of them being associated with a fixed fiber 2(a-d) such that when a pulse current flows through solenoid 7(a), for example, movable fiber 1 is drawn into "V" shaped groove 5(a) and thereafter guided along one of the tapering sides of the groove toward and into alignment with the end of fixed fiber 2(a).

All four (or n) of the solenoids 7 are largely identical. Thus, their details may be described with particular reference to any one of the four. The coil of each solenoid 7 is conventionally wound on a bobbin portion of feedthrough 12, and may be enclosed in a separate housing. When electrified, each solenoid transmits a magnetic pull through the end of its respective magnetic feedthrough greater than that of each individual permanent magnet 8, thereby allowing any one of the powered solenoids to break the latching force of each permanent magnet. In the preferred embodiment, each magnetic feedthrough 12 actually penetrates the side wall of fiber support sleeve 3 to maximize the magnetic pull of the solenoid 7 and permanent magnet 8 attached thereto.

The permanent magnets 8(a-d) are also largely identical and are fitted in series with each respective solenoid 7(a-d) at the outer end of each magnetic feedthrough 12(a-d) so as to allow the permanent magnet, for example 8(a), to accomplish a latching action when power supplied to solenoid 7(a) has drawn movable fiber 1 into close proximity of feedthrough 12(a). Since the gap between the ferromagnetic fiber component 4 and magnetic feedthrough 12(a) is now smaller than the gap between the ferromagnetic fiber component 4 and the three (or n-1) other ferromagnetic feedthroughs 12(b-d) at opposing sides of the fiber support sleeve 3, the magnetic attraction due to magnet 8(a) will be greater, thereby latching the movable fiber into alignment with fixed optical fiber 2(a), even after power to solenoid 7(a) has been terminated.

An air gap or buffer is provided between magnetic feedthrough 12 and ferromagnetic component 4, thereby ensuring that the grooves 5 in bushing 6, and not magnetic feedthrough 12 (which is the strongest attraction point to movable fiber 1) actually stops the fiber and positions it into alignment with fixed optical fiber 2.

The air gap has preferably a thickness between 5 and 100 µm.

Any lack in accuracy of the drawing force of solenoid 7 is minimized by the precise alignment of groove 5 and the strategic positioning of permanent magnet 8. Accordingly, fiber 1 is latched into position without the need of maintaining power, and a precise alignment of the fiber ends is achieved with a low power consumption.

In a preferred embodiment of the invention, as shown in Fig. 4, ferromagnetic component 4 comprises not only an inner magnetic coating or sleeve 30 tightly adhered to the outer shell of movable fiber 1, but further comprises a ferromagnetic contact 32 surrounding magnetic sleeve 30. This contact is tightly adhered at one end 34 to the inner magnetic sleeve 30, close to an end thereof opposite bushing 6, and magnetically or mechanically adhered to the magnetic feedthroughs 12 at its other end.

Contact 32 must be a flexible element. It may have a thickness of 10-100 µm and may be manufactured from any ferromagnetic material having the required resiliency and resistance to bending such as, for example, iron, ferromagnetic alloys or a plastic tape (e.g., Mylar™) loaded with a ferromagnetic powder.

In an embodiment of ferromagnetic contact 32, the contact is a funnel-shaped member that is adhered to movable fiber 1 at the contact's smaller diameter end 34 and magnetically or mechanically adhered to magnetic feedthrough 12 at the contact's larger diameter end. The mechanical adhesions may be obtained by glue or by soldering. Funnel-shaped contact 32 may also incorporate longitudinal cuts to increase its flexibility, in which case the contact is attached, either permanently or by magnetic forces, to all four magnetic feedthroughs 12. Movement of the fiber is allowed due to the high flexibility of the contact. As indicated above, it is possible that the magnetic contact is not mechanically fixed to the magnetic feedthroughs 12. In this case, however, the contact is still somewhat attached to the feedthroughs by the magnetic attraction of the permanent magnets positioned at the outer end of the magnetic feedthroughs, even when the corresponding solenoids are not activated.

In a second more preferred embodiment of ferromagnetic contact 32, as shown in Fig. 4, thin strips of a resilient, magnetic material are used (one strip for each magnetic feedthrough) as magnetic contacts connecting the four magnetic feedthroughs to magnetic sleeve 30. The magnetic contact, in turn, comprises four (or n) different strips instead of a single funnel-shaped member.

Ferromagnetic contact 32 serves the purpose of providing an intimate magnetic contact between feedthrough 12 and magnetic sleeve 30 and suppressing a magnetic gap between them. Accordingly, the magnetic force between magnetic feedthrough 12 and fiber 1 is not weakened even if, as explained above, an empty space (air gap) is left between them to avoid that feedthrough 12 acts as a mechanical end stop for fiber 1. This results in a quick alignment of fiber end 31 with one of fibers 2(a-d) during the switching step and permits fiber 1 to be moved into position with less electro-magnetic force.

Moreover, ferromagnetic contact 32 is particularly effective in transferring the magnetic force due to permanent magnet 8 to magnetic sleeve 30 and provides an increased latching force of fiber 1 to magnetic feedthrough 12, resulting in a reliable and permanent hold of the alignment condition at times between consecutive switching steps, even under vibrations, mechanical shocks, thermal changes, etc. and without the need for permanent magnets 8 of particularly high-strength.

In an embodiment of the invention, both the fixed and movable fibers have a thermally-diffused expanded core ("TEC"), thereby providing them with an enlarged mode field diameter (MFD). Such a construct is defined and described in a paper by O. Hanaizumi et al., IEEE Photonics Technology Letters, Vol. 6, No. 7, July 1994, pages 842-844. Preferably, only the end portions of the optical fibers have a TEC. TEC fibers are commercially available and are designed to reduce the position tolerances of two mating fibers, thereby allowing for a direct facing without using collimators and deflection prisms. The diffraction loss due to the distance between two TEC fibers is, in fact, reduced by increasing the MFD, and, moreover, by expanding the core of the fiber without increasing its outer diameter. Accordingly, the need to precisely handle the fibers is similarly reduced.

When fiber 1 is latched into alignment with a fixed fiber 2 a small space is left between the fiber end faces and the optical coupling of the fibers may be provided by free space propagation in air, a transparent gas, an index matching fluid or vacuum.

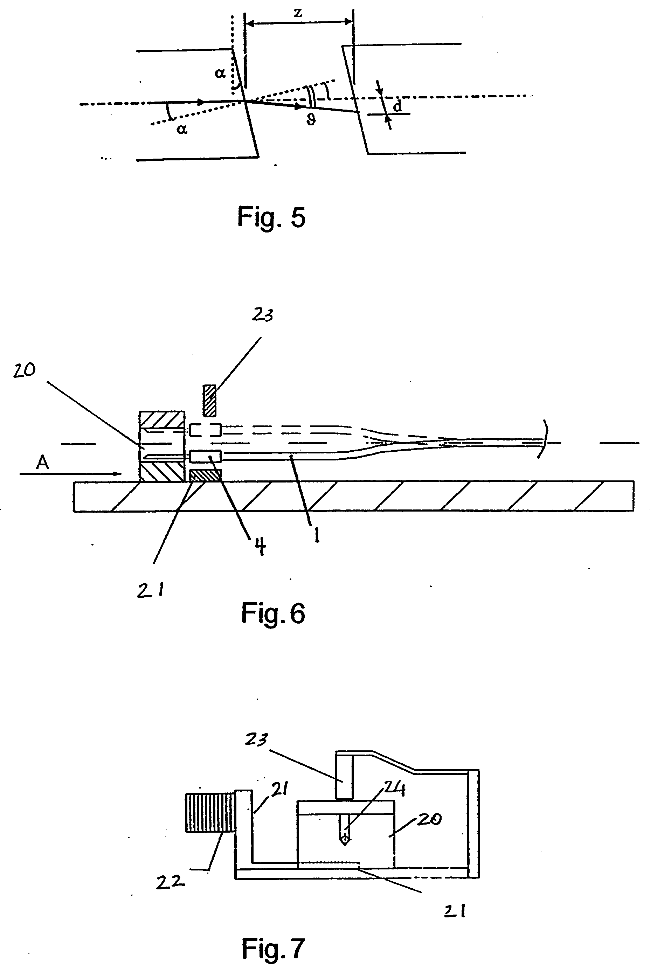

As indicated in Fig. 5, the end faces of the movable and fixed fibers are generally slanted at angle α, to avoid back-reflections, and separated by distance z. The beam at the fiber end output is deflected with an angle θ. The following table further indicates that distance z has a direct impact on the insertion loss (I.L.) of the optical switch. The table gives estimated values in dB of the contributions to insertion loss due to the angled fiber faces, due to Fresnel losses and due to misalignment of the fibers' ends, as well as of total insertion loss, for the case of single mode fibers having a TEC at their ends with a mode field diameter of 40 µm, with a slanting angle α = 6° of their end faces and causing beam deflection at an angle θ = 8.7°.

| Distance z (µm) | 50 | 100 | 150 |
|---|---|---|---|
| Insertion Loss in air | | | |
| I.L. due to angled fiber faces | 0.15 | 0.5 | 1.1 |
| I.L. due to Fresnel loss | 0.5 | 0.5 | 0.5 |
| I.L. due to misalignment | 0.15 | 0.15 | 0.15 |
| **Total I.L. in air** | **0.8** | **1.15** | **1.75** |

| Insertion Loss in index matching fluid | | | |
|---|---|---|---|
| I.L. due to angled fiber faces | 0.10 | | |
| I.L. due to Fresnel loss | 0.1 | | |
| I.L. due to misalignment | 0.15 | | |
| **Total I.L. in index matching fluid** | **0.35** | | |

While the table discloses that the I.L. may be greatly reduced with the use of a conventional index matching fluid (i.e., an oil, alcohol, etc.), the preferred embodiment does not call for such a fluid due to the possibility of degradation of the switch's mechanical and optical properties. Specifically, the fluid may hinder the movement of movable fiber 1 within the support sleeve, due to viscosity, thereby increasing the switching times and overall switch efficiency. Also, bubbles may be created in the fluid, changing its optical transmission properties.

As will be recognized by those skilled in the art, and for the purposes of the present invention, coated optical fiber dimensions can vary from 0.2 mm to 1.0 mm, or as appropriate, this affecting the mechanical properties of the switch such as the amount of movement, the natural frequency, the life, the modulation, etc. Because the thickness of the light transmission area of the end portion of movable optical fiber 1 is typically quite small, only a minor displacement of the fiber is required to break the optical alignment with any of the fixed optical fibers 2.

The magnetic field required to effect such a change in orientation of movable fiber 1 will depend upon the magnetic and mechanical properties of that fiber and, more specifically, the ferromagnetic component 4 thereof, and the distance between the magnetic feedthroughs 12 and ferromagnetic component 4 (or, more specifically, magnetic sleeve 30). The attractive magnetic field is generated largely by solenoid 7 which is connected to power source 16 via electrical cable 18 and baseplate 19.

In another embodiment of the invention, the dual body switch of Figs. 1-4 is more easily provided with a sealed optical path than other more conventional switch designs. A rear sealing sleeve 10 can be hermetically attached to grooved bushing 6 which is, in turn, hermetically attached to fiber support sleeve 3. This construction provides for a completely sealed housing which, in turn, allows for the provision of dry air (to avoid condensation), a dry inert gas, an index matching fluid or vacuum in fiber support sleeve 3 and/or use of the switch in, for example, submarine applications. An exemplary value of a length L of the sealed housing is of about 50 mm.

A casing 36, for example having a cylindrical shape, can be provided around the sealed housing, to protect it and magnetic feedthroughs 12, magnets 8 and solenoids 7 from the environment and possibly to shield the device from external magnetic fields. An exemplary value of a casing diameter Φ is of about 20 mm.

In yet another embodiment of the present invention, a housing comprising support sleeve 3, bushing 6, and rear sealing sleeve 10 of the magnetic switch illustrated in Figs. 1-4 are sandwiched between two funnel shaped boots 14 that act as strain relief members to incoming cables housing fibers 1 and 2. These boots may be manufactured from a rubber or metallic material.

A demonstrator of the present invention, as depicted in Figs. 6 and 7, has been constructed and run through about 10,000 cycles without problem. In the demonstrator, a glass substrate 20 has been cut in order to realize a fiber guiding slot 24 that terminates in a V groove surface. A movable fiber 1 has been coated with a ferromagnetic sleeve made with an epoxy resin filled with pure iron powder 4. The end section of the fiber, with the coating removed, has been fitted into the slot 24. A magnetic circuit 21 and matched coil 22 (solenoid) have been positioned below fiber 1. A permanent magnet 23 has been located above the fiber. Fiber 1, in standby position, remains attracted by the magnetic force of permanent magnet 23. Applying a 10V voltage to coil 22 causes the fiber to switch position and stop in the V-grooved surface. Because the required life of movable fiber 1 is preferably better than 1,000,000 cycles, its strength may need to be improved by applying a metallic coating, thereby reducing the risk of fiber cracking due to the fragility of the glass. Switching times of the test demonstrator varied from about 5 to 10 milliseconds. A similar switching time is expected for the other switch embodiments described herein.

To summarize, the invention provides a magnetically-actuated mechanical switch which is of smaller mass than conventional optical switches, which enables switching to be performed with significantly less energy and/or in significantly less time and which ensures a reliable and permanent latching of one of the switching states after switching, no power being required during the latching condition. The present invention further encompasses fabricated devices containing the above-described switches utilized in a switch matrix such that a single switch is connected in cascade to other switches, thereby rendering a device that is both economical to manufacture and inexpensive to maintain.

Now that the preferred embodiments of the present invention have been shown and described, various modifications and improvements thereon will become readily apparent to those skilled in the art. Accordingly, the spirit and scope of the present invention is to be construed broadly and limited only by the appended claims, not by the foregoing disclosure.

## Claims

1. An optical fiber switch comprising:
a fiber support sleeve; a movable fiber extending through and fixed at a first end of the fiber support sleeve;
the movable fiber having a fixedly secured ferromagnetic component for movement therewith as a unit in response to the presence of a magnetic field;
a bushing positioned at the end of the fiber support sleeve opposite said first end;
at least two fixed fibers positioned in the bushing;
at least two solenoids positioned around the fiber support sleeve to effect movement of the movable fiber toward one of the fixed fibers;
at least two permanent magnets positioned around the fiber support sleeve to effect the latching of the movable fiber into communication with one of the fixed fibers such that light may be transmitted from the movable fiber to the fixed fiber.

2. The switch of claim 1 wherein the fixed fibers are arranged in tapered grooves within the bushing designed to guide the movable fiber into alignment with the fixed fiber.

3. The switch of claim 2 wherein the tapered grooves are V-shaped and are spaced at equivalent distances from the center of the bushing.

4. The switch of claim 2 wherein the bushing is in stainless steel, Titanium or Kovar™.

5. The switch of claim 1 wherein the ends of the fixed and movable fibers have an enlarged mode field diameter.

6. The switch of claim 1 wherein the ferromagnetic component fixedly secured to the movable fiber includes a magnetic sleeve.

7. The switch of claim 6 wherein the magnetic sleeve material is a UV curable epoxy that includes a pure iron powder.

8. The switch of claim 6 wherein the ferromagnetic component further comprises a ferromagnetic contact surrounding the magnetic sleeve and being fixedly secured to one end of the magnetic sleeve.

9. The switch of claim 8 wherein the ferromagnetic contact comprises a flexible funnel-shaped member of a magnetic material having a smaller diameter end completely surrounding the magnetic sleeve and being fixedly secured to the magnetic sleeve at the contact's smaller diameter end.

10. The switch of claim 8 wherein the ferromagnetic contact comprises flexible strips of a magnetic material arranged around the magnetic sleeve and fixedly secured to one end of the magnetic sleeve.

11. The switch of claim 1 wherein each solenoid is associated with a permanent magnet and with a magnetic feedthrough attached to the fiber support sleeve.

12. The switch of claim 11 wherein the magnetic feedthrough penetrates a side wall of the fiber support sleeve.

13. The switch of claim 1 wherein a fiber housing comprising the fiber support sleeve and the bushing is hermetically sealed.

14. The switch of claim 13 wherein a dry gas is provided in the fiber housing.

15. A device containing a plurality of the switches defined in claim 1 connected in cascade.
